Europäisches Patentamt

European Patent Office

Office européen des brevets

(11) Publication number:　**0 186 517 B1**

# EUROPEAN PATENT SPECIFICATION

(45) Date of publication of patent specification: **11.03.92**　(51) Int. Cl.⁵: **H01Q  1/00, B32B 33/00, B32B 15/08**

(21) Application number: **85309506.5**

(22) Date of filing: **24.12.85**

(54) **Electromagnetic reflection body.**

(30) Priority: **25.12.84 JP 279404/84**

(43) Date of publication of application:
**02.07.86 Bulletin  86/27**

(45) Publication of the grant of the patent:
**11.03.92 Bulletin  92/11**

(84) Designated Contracting States:
**DE FR**

(56) References cited:
**US-A- 4 463 055**

(73) Proprietor: **Bridgestone Corporation**
**10-1, Kyobashi 1-Chome Chuo-Ku**
**Tokyo 104(JP)**

(72) Inventor: **Kanayama, Tatsuya**
**5-8-103, Ogawahigashi-Cho 3-chome**
**Kodaira City Tokyo(JP)**
Inventor: **Tanaka, Akihiko**
**2-8-103, Ogawahigashi-Cho 3-chome**
**Kodaira City Tokyo(JP)**
Inventor: **Yamanaka, Yutaka**
**17-13, Hon-Cho 2-chome**
**Koganei City Tokyo(JP)**
Inventor: **Toyoda, Hitoshi**
**2-29, Azuma-Cho 5-chome**
**Iruma City Saitama Pref.(JP)**

(74) Representative: **Whalley, Kevin et al**
**MARKS & CLERK 57/60 Lincoln's Inn Fields**
**London WC2A 3LS(GB)**

## Description

This invention relates to an electromagnetic reflection body for use in a parabolic antenna, in particular for use in an electromagnetic wave reflector, an electromagnetic interference shielding plate or the like. The invention further relates to a method of manufacturing an electromagnetic reflection body for use in a parabolic antenna.

An electromagnetic reflection body is required to be used in an electromagnetic wave reflector as a parabolic antenna for radio wave communication or in an electromagnetic interference shielding plate for office automatic apparatus such as personal computers, facsimile equipment and copying machines.

For this purpose, a metallic plate, metallic foil, or woven or nonwoven fabric made from carbon fiber or aluminium-coated glass fiber is suitably used as an electromagnetic reflecting member.

These electromagnetic reflecting members are bonded to a back-up member made of synthetic resin for example, to thereby provide a desired strength. Additionally, after the electromagnetic reflecting member is bonded to the back-up member as mentioned above, a coating for protecting the electromagnetic reflecting member is applied to the electromagnetic reflection surface of the electromagnetic reflecting member.

On the other hand, when microwaves using an SHF wave or an EHF wave are transmitted and received by means of a parabolic antenna, it is possible to reduce a wave attenuation factor by reducing the thickness of the surface protecting layer in the antenna. Therefore, in order to make such a protecting layer as thin as possible, it is optimum to perform the application of the coating.

However, when a metal such as aluminium is used as an electromagnetic reflecting member, a preliminary treatment or an undercoating is required prior to the coating, resulting in an increase of working equipment and working steps. Moreover, in respect of the surface coating on the electromagnetic reflecting member, maintenance such as repainting is required when a parabolic antenna is used over a long time.

US-A-4463055 describes, in particular to relation to figures 1 and 2 thereof, an electromagnetic reflection body comprising a reflecting foil 16 covered by a transparent film 20, which can be a resin, and bonded to a back-up member 14; the purpose of this body is to reflect radio frequency waves. In the embodiment of figure 6 of US-A-4463055, which is however used for solar energy or screen image projection, a pressure sensitive adhesive 18A is interposed between a polymeric carrier layer 20 and a support surface 24.

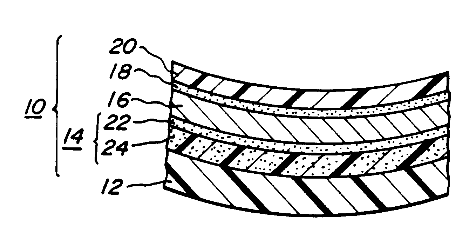

The present invention aims to provide an electromagnetic reflecting body wherein there may be readily provided a film on a surface of an electromagnetic reflecting member without coating after an electromagnetic reflecting member is bonded to a back-up member.

The present invention in one aspect provides an electromagnetic reflection body for use in a parabolic antenna, comprising a composite sheet member composed of an electromagnetic reflective member, a resin film bonded to the front, reflection surface thereof and a polyvinyl fluoride film bonded to the back surface of said reflecting member, and a back-up member bonded to the back surface of said composite sheet member, characterized in that the composite sheet member is adhered to the back-up member by means of the polyvinyl fluoride film.

The invention in another aspect provides a method of manufacturing an electromagnetic reflection body for use in a parabolic antenna, comprising the step of bonding a resin film and a polyvinyl fluoride film to a front, reflection surface and a back surface of an electromagnetic reflecting member, respectively, to form a composite sheet member; characterized by comprising the further steps of: preshaping the composite sheet member into a parabolic form; and integrally uniting the preshaped composite sheet member with a previously prepared back-up member into a parabolic form by heating under compression, the polyvinyl fluoride film being used as an adhesion layer.

Therefore, the electromagnetic reflection body according to the invention may be manufactured only by bonding the composite sheet member to the back-up member. Also, since the resin film is previously bonded to the front surface of the composite sheet member, it is possible to protect the electromagnetic reflecting member.

The invention will be further described, by way of example only, with reference to the accompanying drawing, which is a partially sectional view of an embodiment of an electromagnetic reflection body according to the invention.

The electromagnetic reflection body shown in the drawing comprises a composite sheet member 10 composed of an electromagnetic reflecting member 16, a resin film 20 bonded to the front, reflection surface thereof and a polyvinyl fluoride film 24 bonded to the back surface of the reflecting member 16. A back-up member 12 is bonded to the back surface of the composite sheet member 10.

In the composite sheet member 10, the resin film 20 as a protective layer is previously bonded to the front, electromagnetic reflection surface of the electromagnetic reflecting member 16 through an adhesion layer 18.

The back surface of the reflecting member 16 is bonded to the back-up member 12 through an adhesion layer 14. The composite sheet member 10 is parabolically shaped before the composite sheet member is bonded to the back-up member 12.

The adhesion layer 14 is composed of a combination of an adhesive layer 22 with an adhesion resin film 24 which comprises the polyvinyl fluoride film, as shown in the drawing. The polyvinyl fluoride film 24 is most preferably a Tedlar film (trade name, made by E.I. Du Pont Co.).

Once the back-up member 12 is molded, the composite sheet member 10 is bonded thereto through the adhesion layer 14. The composite sheet member 10 includes the adhesion layer 14 in order to make the one-piece molding of these members easy. In the case of the one-piece molding, it is desirable that in order to prevent the adhesive from flowing in the molding, a woven or nonwoven sheet member (which permits the adhesive to permeate therethrough in the molding) such as woven or nonwoven glass fiber fabric is interposed between the adhesion layer and the back-up member. Such an interposition of the sheet member not only prevents the flowing of the adhesive in the molding, but also exhibits a favourable effect on air escape.

As the electromagnetic reflecting member 16, use may be made of a metallic plate, metallic foil, metallic net, metal-plated film, metal-deposited film and metal-containing film as well as woven fabrics, knitted goods, nonwoven fabrics and the like of a conductive fiber such as metallic fiber, carbon fiber, metal-plated organic fiber, metal-plated glass fiber, aluminium-coated glass fiber, or copper sulfide-deposited acrylic fiber. In the case of using an aluminium foil, when the thickness is small, premolding is difficult and thus wrinkles are apt to be caused. Also the aluminium foil is drawn toward a rib provided at the back-up member in the molding to easily cause wrinkles. On the contrary, when the thickness is large, its weight becomes heavy. Therefore, a thickness of about 30-150 $\mu$m is preferable.

As the resin film 20, use may be made of urethane series film (non-yellowing type is preferable), acrylic film, fluorine series film (Teflon, Tedlar, Kynar and the like), olefin series film, polyester film, vinyl chloride film and the like. In the case of out-door use, the urethane series and fluorine series films can be applied. In case of using Tedlar film, when the thickness is too large, heat shrinkage is produced to cause peeling and strain so that the thickness is preferably not more than 100 $\mu$m.

As the adhesive layers 18 and 22, urethane series, epoxy series, rubber series, acrylic series and ethylene vinyl acetate (EVA) series adhesives are suitable. Further, as the back-up member 12, use may be made of thermoplastic, fiber-reinforced thermoplastic (FRTP), thermoset plastic, and fiber-reinforced thermoset plastic (FRP) resins.

The invention will be further described with reference to the following illustrate Examples. Example 1 is outside the scope of the invention, and Example 2 is in accordance with the invention.

Example 1

A composite sheet member 10 composed of an aluminium foil as an electromagnetic reflecting member 16 having a thickness of 40 $\mu$m and a fluoride series film, Tedlar (trade name, made by E.I. Du Pont Co.), having a thickness of 38 $\mu$m as a resin film 20 bonded to one side of the aluminium foil through a urethane series adhesive layer 18 was subjected to drawing into a predetermined parabolic shape.

On the other hand, a sheet molding compound (SMC) containing 30% by weight of glass as a back-up member 12 was subjected to a compression molding at a heating temperature of 140°C under a pressure of 70 kg/cm$^2$ into a parabolic shape.

To the electromagnetic reflection surface or mirror surface of the back-up member 12 made of FRP was bonded the drawn composite sheet member 10 so as to face the Tedlar film to an electromagnetic reflection surface, using an epoxy series adhesive as an adhesive layer 22. In this case, an adhesion resin film 24 as shown in the drawing was not used.

Example 2

To both sides of an electromagnetic reflecting member 16 made of aluminium foil having a thickness of 40 $\mu$m were bonded Tedlar films each having a thickness of 38 $\mu$m as a resin film 20 and an adhesion resin film 24 through a urethane series adhesive as an adhesive layer 18 and an adhesive layer 22 to thereby provide a composite sheet member 10 provided at both sides with the films.

The resulting composite sheet member 10 was parabolically preshaped in the same manner as described in Example 1 and then integrally united with a sheet molding compound as a back-up member 12 under compressing and heating. Consequently, the Tedlar film served as an adhesive to omit the application of an adhesive to the back surface of the composite sheet member 10.

As mentioned above, in the electromagnetic reflection body according to the invention, an electromagnetic reflecting surface with a resin film is used, so that there is no necessity for applying a coating to the reflection surface after the one-piece molding and therefore it is possible to obtain an electromagnetic reflection body which is easy to produce and which has excellent durability.

## Claims

1. An electromagnetic reflection body for use in a parabolic antenna, comprising a composite sheet member (10) composed of an electromagnetic reflecting member (16), a resin film (20) bonded to the front reflection surface thereof and a polyvinyl fluoride film (24) bonded to the back surface of said reflecting member (16), and a back-up member (12) bonded to the back surface of said composite sheet member (10), characterized in that the composite sheet member (10) is adhered to the back-up member (12) by means of the polyvinyl fluoride film (24).

2. A method of manufacturing an electromagnetic reflection body for use in a parabolic antenna, comprising the step of bonding a resin film (20) and a polyvinyl fluoride film (24) to a front reflection surface and a back surface of an electromagnetic reflecting member (16), respectively, to form a composite sheet member (10);
characterized by comprising the further steps of: preshaping the composite sheet member (10) into a parabolic form; and

integrally uniting the preshaped composite sheet member (10) with a previously prepared back-up member (12) into a parabolic form by heating under compression, the polyvinyl fluoride film (24) being used as an adhesion layer.

## Revendications

1. Corps réflecteur d'ondes électromagnétiques, destiné à servir dans une antenne parabolique, ce corps comprenant un élément (10) en feuille composite, élément composé d'un organe (16) réflecteur d'ondes électromagnétiques, d'une pellicule (20) de résine collée sur la surface avant réflectrice de cet organe et d'une pellicule (24) de poly(fluorure de vinyle) collée sur la surface arrière dudit organe (16) réflecteur, ainsi qu'un élément (12) d'appui collé à la surface arrière dudit élément (10) en feuille composite, corps caractérisé en ce que l'élément (10) en feuille composite est collé, à l'aide de la pellicule (24) de poly(fluorure de vinyle) à l'élément (12) d'appui ou de support.

2. Procédé pour fabriquer un corps pour réflexion d'ondes électromagnétiques, corps destiné à servir dans une antenne parabolique, le procédé comprenant l'étape consistant à coller une pellicule (20) de résine et une pellicule (24) de poly(fluorure de vinyle) sur une surface réfléchissante avant et sur une surface arrière d'un organe (16) réflecteur d'ondes électromagnétiques, respectivement, afin de former un élément (10) de feuille composite, procédé caractérisé en ce qu'il comprend les étapes supplémentaires consistant à soumettre l'élément (10) en feuille composite à un préfaçonnage pour lui donner une forme parabolique : et à unir l'élément (10) en forme de feuille composite, préfaçonnée, avec un élément (12) d'appui préparé au préalable et à mettre le tout en forme parabolique par chauffage sous compression, la pellicule (24) de poly(fluorure de vinyle) servant de couche d'adhésif.

## Patentansprüche

1. Elektromagnetischer Rückstrahlungskörper für eine Parabolantenne, mit einem Verbundplattenbauteil (10), das aus einem elektromagnetisch rückstrahlenden Teil (16), einer auf dessen nach vorne weisenden Rückstrahlungsoberfläche geklebten Harzschicht (20) und einer auf die Rückseite des rückstrahlenden Teils 16) geklebten Polyvinylfluoridfolie (24) zusammengesetzt ist, und einem auf die Rückseite des Verbundplattenbauteils (10) geklebten Stützteil (12), dadurch gekennzeichnet, daß das Verbundplattenbauteil (10) durch die Polyvinylfluoridfolie (24) mit dem Stützteil (12) verklebt ist.

2. Verfahren zur Herstellung eines elektromagnetischen Rückstrahlungskörpers für eine Parabolantenne, mit dem Schritt des Aufklebens einer Harzschicht (20) auf eine nach vorne weisende Rückstrahlungsoberfläche und einer Polyvinylfluoridfolie (24) auf die Rückseite eines elektromagnetisch reflektierenden Teils (16) zum Bilden eines Verbundplattenbauteils (10), gekennzeichnet durch die weiteren Schritte:

Vorformen des Verbundplattenbauteils (10) in eine parabolische Form, und

einstückiges Verbinden des vorgeformten Verbundplattenbauteils (10) mit einem zuvor vorbereiteten Stützteil (12) in eine parabolische Form durch Erhitzen unter Druck, wobei die Polyvinylfluoridfolie (24) als Klebschicht dient.